**Europäisches Patentamt**

**European Patent Office**

**Office européen des brevets**

(19)

(11) Veröffentlichungsnummer: **0 211 374**
**B1**

(12)

# EUROPÄISCHE PATENTSCHRIFT

(45) Veröffentlichungstag der Patentschrift:
**26.04.89**

(51) Int. Cl.⁴: **B25J 9/18**, G05B 11/06

(21) Anmeldenummer: **86110395.0**

(22) Anmeldetag: **28.07.86**

(54) **Einrichtung zum Kompensieren des Schwerkrafteinflusses auf ein elektromotorisch heb- und senkbares Element einer Werkzeugmaschine oder eines Roboters und Verfahren zum Betrieb einer derartigen Einrichtung.**

(30) Priorität: **09.08.85 DE 3528685**

(43) Veröffentlichungstag der Anmeldung:
**25.02.87 Patentblatt 87/9**

(45) Bekanntmachung des Hinweises auf die Patenterteilung:
**26.04.89 Patentblatt 89/17**

(84) Benannte Vertragsstaaten:
**CH DE FR IT LI**

(56) Entgegenhaltungen:
**US-A- 3 614 996**
**US-A- 4 452 341**

(73) Patentinhaber: **Siemens Aktiengesellschaft Berlin und München, Wittelsbacherplatz 2, D-8000 München 2(DE)**

(72) Erfinder: **Papiernik, Wolfgang, Dr., Eskilstunastrasse 9, D-8520 Erlangen(DE)**
Erfinder: **Steff, Johann, Dipl.-Ing., Friedrich-Bauer-Strasse 16, D-8520 Erlangen(DE)**

**Beschreibung**

Die Erfindung bezieht sich auf ein Verfahren zum Kompensieren des Schwerkrafteinflusses auf ein elektromotorisch heb- und senkbares Maschinenelement, insbesondere einer Werkzeugmaschine oder eines Roboters, wobei die Führungsgröße für die Bewegung des zugeordneten Antriebs auf diesen über mindestens einen Regler so einwirkt, daß als Stellgröße ein dem jeweils einzustellenden Moment des Antriebs entsprechender Strom auslösbar ist, und wobei der Stellgröße eine Steuergröße überlagerbar ist, die ein stützendes Gegenmoment zu dem durch die Schwerkraft auf das heb- und senkbare Element und damit auf den Antrieb ausgeübten Moment bildet.

Bei hängenden Achsen einer Werkzeugmaschine sowie bei den aufeinander reitenden Achsen eines Roboters tritt das Problem auf, daß aufgrund des Schwerkrafteinflusses die elektromotorisch heb- und senkbaren Elemente im ungeregelten Zustand in die Senkposition sich bewegen. Bei handelsüblichen Einrichtungen wird deshalb beispielsweise mit Federn oder hydraulischen Hilfskreisen ein Schwerkraftausgleich angestrebt. Dabei erweist es sich jedoch als ungünstig, daß derartige Mittel zum Schwerkraftausgleich aufgrund ihrer bewegten Masse und/oder ihrer Federeigenschaft das Regelverhalten der Gesamtanordnung hinsichtlich der erreichbaren Dynamik verschlechtern.

Ein Verfahren der eingangs genannten Art ist aus der US-A 3 614 996 bekannt. Dabei wird das Gewicht eines Fahrstuhlkorbs zumindest teilweise durch eine elektrische Stromaufschaltung kompensiert. Die zu dieser Kompensation dienende Steuergröße ist bei einem Fahrstuhlkorb relativ leicht bestimmbar. Bei Werkzeugmaschinen und Robotern ist dies jedoch meist nicht der Fall, weil dabei gerade diese Steuergröße häufig wegabhängig veränderlich ist.

Aufgabe der Erfindung ist es, für Werkzeugmaschinen und Roboter ein Verfahren der eingangs genannten Art so auszubilden, daß ein äußerst einfaches Erfassen der erforderlichen Steuergröße ermöglicht wird.

Gemäß der Erfindung wird diese Aufgabe dadurch gelöst, daß zunächst ohne Steuergröße mit einem unkritisch eingestellten Regler bei vorgebbaren Lagen jeweils ein statischer Zustand eingeregelt wird, daß die dabei resultierende Stellgröße registriert wird, daß für jede dieser Lagen die jeweils registrierte Stellgröße als Steuergröße aufgeschaltet wird und daß daraufhin der Regler in seiner Einstellung optimiert wird.

Die Optimierung kann beispielsweise gemäß der DE-A 3 427 127 erfolgen.

Eine vorteilhafte Ausbildung des Verfahrens ist dadurch gekennzeichnet, daß nach der Optimierung des Reglers die Aufschaltung der Steuergröße zurückgenommen wird. Die zwischenzeitige Aufschaltung der Steuergröße erleichtert dabei die Optimierung des Reglers.

Ein Ausführungsbeispiel der Erfindung ist in der Zeichnung dargestellt und wird im folgenden näher erläutert. Dabei zeigen:

Fig. 1 eine übliche Möglichkeit der Schwerkraftkompensation und
Fig. 2 ein Blockschaltbild der Erfindung.

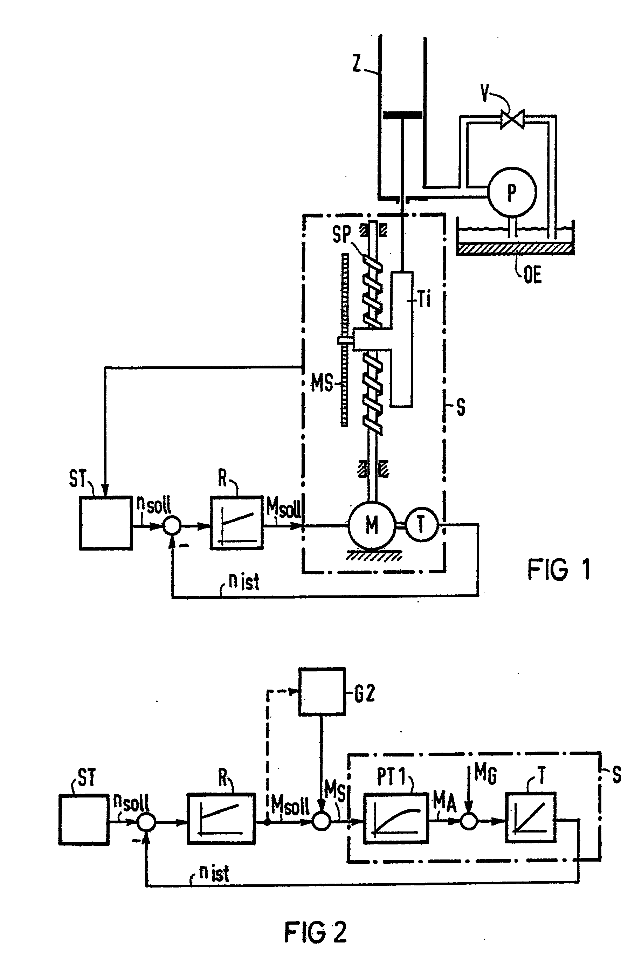

In der Darstellung gemäß Fig. 1 ist der vertikal gelagerte Tisch TI einer der Übersichtlichkeit halber nicht dargestellten Werkzeugmaschine, z.B. einer Hochgeschwindigkeitsfräse, gezeigt, der von einer Spindel SP bewegt wird, die mit einem Motor M gekuppelt ist.

Die Steuerung des Motors M erfolgt anhand von Stellbefehlen einer Werkzeugmaschinensteuerung ST. Diese ist über ein Meßsystem MS über die jeweilige Lage des Tisches TI informiert und ermittelt numerisch eine Solldrehzahl $n_{soll}$ für den Motor M. Die Solldrehzahl $n_{soll}$ ist dabei Führungsgröße für einen Regler R, der im Ausführungsbeispiel als PI-Regler ausgebildet ist. Der Motor M ist mit einem Tachogenerator T verbunden, der die jeweilige Istdrehzahl $n_{ist}$ auf den Regler R rückführt, so daß aus der Regelabweichung zwischen Solldrehzahl $n_{soll}$ und Istdrehzahl $n_{ist}$ der Regler R das jeweilige Sollmoment $M_{soll}$ als Stellgröße in Form eines Stroms für den Motor M bildet. Die gesamte Anordnung von Tisch TI, Meßsystem MS, Spindel SP, Motor M und Tachogenerator T ist in der Darstellung gestrichelt zur Strecke S zusammengefaßt dargestellt.

Der Tisch TI hat aufgrund seines Eigengewichtes die Tendenz sich abzusenken. Dies führt dazu, daß über die nicht hemmende Spindel SP auf dem Motor M ein Moment ausgeübt wird, das in der Darstellung gemäß Fig. 2 als Gewichtsmoment $M_G$ bezeichnet wird. Bei der in Fig.1 dargestellten Einrichtung wird dieses Gewichtsmoment $M_G$ dadurch eliminiert, daß der Tisch TI mit einem Kolben K verbunden ist, der in einem Zylinder Z geführt ist, wobei der Kolben K mit Hilfe eines von einer Pumpe P erzeugten und über ein Ventil V einstellbaren Öldruckes eine definierte Gegenkraft ausübt. Die Pumpe P wird dabei mit Öl einer Ölwanne OE gespeist.

Die Darstellung gemäß Fig. 2 zeigt ein Blockschaltbild der Erfindung, wobei von einer Einrichtung gemäß Fig. 1 ausgegangen wird, bei der allerdings auf den hydraulischen Gewichtsausgleich verzichtet ist. Gleiche Elemente weisen in Fig. 2 gleiche Bezugszeichen wie in Fig. 1 auf.

In der Darstellung gemäß Fig. 2 ist für die Strecke S deren Ersatzschaltbild gezeigt, bei dem die elektrischen Eigenschaften durch ein PT1-Glied und die mechanischen Eigenschaften durch ein I-Glied angegeben sind.

Zunächst sei noch einmal auf die Funktion der Einrichtung gemäß Fig. 1 verwiesen. Dabei wird der Strecke S und damit dem PT1-Glied eingangsseitig das Sollmoment $M_{soll}$ in Form eines Stromes zugeführt, der Motor M erzeugt hieraus ein Antriebsanmoment $M_A$, dieses wird vom Gewichtsmoment $M_G$ überlagert und das resultierende Moment führt zu einer Istdrehzahl $n_{ist}$. Dabei wird jedoch das Gewichtsmoment $M_G$ weitgehend eliminiert.

Hier unterscheidet sich die Erfindung vom Stand der Technik dadurch, daß auf eine derartige Kompensation des Gewichtsmomentes $M_G$ völlig verzichtet wird. Demzufolge wirkt die Überlagerung von Antriebsmoment $M_A$ und Gewichtsmoment $M_G$ auf das I-Glied ein. Die erfindungsgemäße Kompensation des Schwerkrafteinflusses erfolgt nun dadurch, daß das Sollmoment $M_{soll}$ des der Strecke vorgeschalteten Reglers R um eine Steuergröße $M_S$ so korrigiert wird, daß durch diese ein stützendes Gegenmoment zu dem durch die Schwerkraft auf das heb- und senkbare Element und damit auf den Antrieb, d.h. den Motor M, ausgeübten Momentes gebildet wird. Der Betrag und die Richtung dieser Steuergröße kann berechnet oder gemessen werden und von einem demzufolge einzustellenden Geber G2 wird dann ein entsprechendes Steuersignal ausgegeben.

Häufig ist es jedoch der Fall, daß diese Steuergröße schwer bestimmbar ist, insbesondere wenn diese Steuergröße wegabhängig veränderlich ist. Letzteres ist insbesondere bei aufeinander reitenden Achsen von Robotern der Fall. Daher wird zur Steuergrößebestimmung aus einer vorgegebenen Lage heraus, insbesondere bei der Erstinbetriebnahme, gemäß der Erfindung folgendes Verfahren angewendet.

Zunächst wird bei nicht geschlossenem Regelkreis durch Lösen von der Übersichtlichkeit halber in der Darstellung gemäß Fig.1 nicht gezeigten mechanischen Bremsen der Regelsinn der Anordnung ermittelt, indem beispielsweise durch kurzseitiges Anregen der Strecke S mit Nennmoment das Vorzeichen der Streckenantwort in Form von Drehzahlistwerten ermittelt wird.

Daraufhin wird der Regelkreis mit robusten Regelparametern geschlossen. Damit wird über den gesamten Variationsbereich der Streckenparameter eine stabile, wenn auch nicht besonders dynamische Regelung ermöglicht.

Wenn für die jeweilige Lage ein statischer Zustand sich eingestellt hat, wird, wie durch eine gestrichelte Wirklinie zwischen Regler R und Geber G2 angedeutet, die jeweilige Stellgröße $M_{soll}$ des Reglers R vom Geber G2 registriert. Im folgenden wird diese Stellgröße $M_{soll}$ als Steuergröße $M_S$ auf die Strecke S aufgeschaltet. Daraufhin kann der Regler R in seiner Einstellung so optimiert werden, wie dies beispielhaft in der eingangs genannten DE-Anmeldung beschrieben ist.

Wenn bei Robotern während des auf die Inbetriebnahmephase folgenden eigentlichen Betriebs der störende Schwerkrafteinfluß starken wegabhängigen Schwankungen unterliegt, kann nach der Optimierung des Reglers R die Aufschaltung der Steuergröße $M_S$ wieder rückgängig gemacht werden. Die Kompensation erfolgt daraufhin automatisch durch den Regler R. Die zwischenzeitliche Aufschaltung der Steuergröße $M_S$ hat dann den Vorteil erbracht, daß während der Inbetriebnahmephase durch die Steuergröße $M_S$ der Störeinfluß des Gewichtsmoments $M_G$ kompensiert worden ist, so daß die Streckenparameter für die Optimierung eindeutig identifiziert werden konnten, so daß die Einstellung des Reglers R erleichtert wurde und nicht die Gefahr eines Insichzusammenfallens des

Roboters bestand.

Das erfindungsgemäße Verfahren kann nicht nur bei üblichen Regelstrukturen, sondern auch bei Einrichtungen wie Zustandsregler mit Lastmomentbeobachter verwendet werden. Die Regelstrukturen können durchaus kaskadiert aufgebaut sein, wobei einzelne Regelschleifen für Weg, Drehzahl und Strom vorgesehen sein können.

**Patentansprüche**

1. Verfahren zum Kompensieren des Schwerkrafteinflusses auf ein elektromotorisch heb- und senkbares Maschinenelement (TI), insbesondere einer Werkzeugmaschine oder eines Roboters, wobei die Führungsgröße ($n_{soll}$) für die Bewegung des zugeordneten Antriebs (M) auf diesen über mindestens einen Regler (R) so einwirkt, daß als Stellgröße ein dem jeweils einzustellenden Moment ($M_{soll}$) des Antriebs (M) entsprechender Strom auslösbar ist, und wobei der Stellgröße ($M_{soll}$) eine Steuergröße ($M_S$) überlagerbar ist, die ein stützendes Gegenmoment zu dem durch die Schwerkraft auf das heb- und senkbare Element (TI) und damit auf den Antrieb (M) ausgeübten Moment bildet, dadurch gekennzeichnet, daß zunächst ohne Steuergröße mit einem unkritisch eingestellten Regler (R) bei vorgebbaren Lagen jeweils ein statischer Zustand eingeregelt wird, daß die dabei jeweils resultierende Stellgröße registriert wird, daß für jede dieser Lagen die jeweils registrierte Stellgröße als Steuergröße ($M_S$) aufgeschaltet wird und daß daraufhin der Regler (R) in seiner Einstellung optimiert wird.

2. Verfahren nach Anspruch 1, dadurch gekennzeichnet, daß nach der Optimierung des Reglers (R) die Aufschaltung der Steuergröße ($M_S$) zurückgenommen wird.

**Claims**

1. Method for compensating the influence of the force of gravity on a machine element (T1), which can be lifted and lowered by means of an electric motor, more particularly of a machine tool or of a robot, the reference variable ($n_{soll}$) for the movement of the associated drive (M) acting on the latter by way of at least one controler (R) such that a current corresponding to the moment ($M_{soll}$) of the drive (M), which moment is to be adjusted in each case, can be released as a correcting variable and it being possible to superimpose a control variable ($M_S$) on the correcting variable ($M_{soll}$), which control variable constitutes a supporting counter-moment in relation to the moment exerted by the force of gravity on the element (TI) which can be lifted and lowered and with that on the drive (M), characterised in that in the first instance, in each case, a static state is regulated without control variable with a controller (R), which is adjusted uncritically, at positions which can be preset, in that the correcting variable resulting thereby in each case is registered, in that the correcting variable registered in each case, for each of these positions, is applied as a control variable (M$_S$) and in that as a result the controller (R) is optimized in its adjustment.

2. Method according to claim 1, characterised in that after optimization of the controller (R) the application of the control variable (M$_S$) is cancelled.

## Revendications

1. Procédé pour compenser les influences de la gravité sur un élément de machine (TI) susceptible d'être soulevé et d'être abaissé à l'aide d'un moteur électrique, en particulier d'une machine-outil ou d'un robot, du type dans lequel la grandeur de référence (n$_{soll}$) pour le déplacement du dispositif d'entraînement associé (M) agit sur celui-ci par l'intermédiaire d'au moins un régulateur (R) de manière que soit déclenché, en tant que grandeur de réglage, un courant qui correspond au couple (M$_{soll}$) à ajuster au niveau du dispositif d'entraînement (M), alors qu'à la grandeur de réglage (M$_{soll}$) est susceptible d'être superposée une grandeur de commande (M$_S$) qui forme un couple antagoniste d'appui pour le couple exercé par la gravité sur l'élément (TI) susceptible d'être soulevé ou d'être abaissé et donc sur le couple exercé sur le dispositif d'entraînement caractérisé par le fait qu'il consiste à ajuster, d'abord sans grandeur de commande, à l'aide d'un régulateur (R) ajusté de façon non critique et pour des positions prédéterminées, un état statique, à enregistrer la grandeur de réglage qui en résulte à chaque fois, à faire intervenir pour chacune de ces positions, la grandeur de réglage respectivement enregistrée, en tant que grandeur de commande (M$_S$), et à optimiser ensuite le réglage du régulateur (R).

2. Procédé suivant la revendication 1, caractérisé par le fait qu'après optimisation du régulateur (R) on retire l'intervention de la grandeur de commande (M$_S$).

FIG 1

FIG 2